# EUROPEAN PATENT APPLICATION

(11) **EP 1 970 281 A2**
(43) Date of publication of application: **17.09.2008**
(21) Application number: 08102550.4
(22) Date of filing: 12.03.2008
(51) Int. Cl.: B62B 5/00, B62B 5/04

(54) **Wheeled support device**

(30) Priority: 15.03.2007 GB 0704953
(71) Applicant: Colson Castors Limited, Hill Top, West Bromwich, West Midlands B70 0TZ (GB)
(72) Inventor: Li, Raymond Shu Wai, West Bromwich, West Midlands B70 0TZ (GB); Taylor, Christopher Jonathan, West Bromwich, West Midlands B70 0TZ (GB)
(74) Representative: Dodd, Graham Marshall

(57) **Abstract**

A wheeled support device comprising a rotatable ground-engageable wheel (12) and a braking mechanism, characterised in that the braking mechanism comprises a braking member (24) which is operable to inhibit rotation of the wheel, and a stop member (22) which is operable to engage the ground and move the wheel out of contact with the ground.

## Description

### Description of Invention

This invention relates to a wheeled support device for use on a hand-propelled vehicle such as a shopping trolley or cart, to facilitate movement of the vehicle, and which also is able to control the movement of the device in response to a signal.

A wheeled support device in accordance with the invention, which may be a castor assembly or possibly a wheel assembly which is not able to swivel about an upright axis in the manner of a castor, has been devised for use with shopping trolleys or airport baggage trolleys, for the purpose of preventing, or at least making more difficult, the theft or misuse of a trolley provided with at least one of the support devices. However, it is to be appreciated that in being devised for this purpose, a support device in accordance with the invention may find use in relation to other vehicles, or in other situations, where similar or analogous requirements arise.

Theft of shopping trolleys is a frustrating and expensive problem. It is known to provide shopping trolleys with wheels (of which at least some are castors) which are permitted freely to rotate when inside a specified area, and at least one of which is prevented from rotating if the trolley crosses the boundary of the specified area. To this end, a wheel or wheels may have a braking device responsive to a transmitted radio signal, e.g. from a loop extending along the boundary of the area, or to a magnetic field. One of the disadvantages of such known method of immobilising a shopping trolley is that the braked wheel(s) may be brought to a sudden stop, and if the user of the trolley continues to push the trolley after the wheel(s) have been immobilised, the wheel(s) can be damaged by the abrasion from the ground surface producing a flattened portion on the circumference of the wheel. This means that the damaged wheel(s) need to be replaced, incurring a cost for the owner of the trolley. A further disadvantage is that if the trolley is immobilised suddenly and unexpectedly, it may cause injury to the person operating the trolley.

Castors having magnetically-operated devices which raise the wheel of the castor off the surface on which it is running are disclosed in, for example, EP 575414B, EP 889819B, and EP 1101685B. Such castors present the above-mentioned disadvantage of causing a vehicle such as shopping trolley to be immobilised suddenly and unexpectedly.

An aim of this invention is to overcome one or more of the above disadvantages.

According to a first aspect of the invention, we provide a wheeled support device as set forth in claim 1 hereof.

A support device such as a castor in accordance with the invention presents the advantage that it is possible for the wheel to be braked by operation of the braking member before the stop member is caused to engage the ground and move the wheel out of contact with the ground, completely to stop a vehicle such as a shopping trolley from being wheeled along. The immobilisation of the vehicle thus is not so sudden and unexpected as is achieved by known castors as above mentioned. Preferably the stop member and braking member are caused to operate in the above sequence.

The braking member may be caused to engage a surface of the wheel with increasing force, so that rotation of the wheel is increasingly inhibited before the stop member is operated.

The braking mechanism may include elements arranged to be driven by rotation of the wheel to cause the braking member and stop member to be operated. Such elements may include a cam for operating the braking member, and a cam and/or a holding member respectively for operating the stop member and for holding it in a non-operating position and releasing it to operate when required.

Such elements may be rotatably driveable by the wheel, and may include a drive element which is held by a retaining member in a position in which it is not driveable by the wheel, and is releasable by the retaining member to move to a position in which it is engageable by at least one driving formation of the wheel as the wheel rotates.

The retaining member may be caused to move to release the drive element by an initiation means, responsive to an initiation signal. The initiation means may comprise an engagement element which is caused to engage the wheel as it rotates, to cause the retaining member to be moved to release the drive element. An electro-mechanical device, e.g. a solenoid carried by the retaining member, may cause the engagement element to be engaged by the wheel.

After operation of the braking member and stop member as aforesaid, the braking mechanism may be restored to a first operational state by manual resetting, using a resetting device. Where the elements are rotatably driveable, such resetting may involve reverse rotation thereof. The invention also provides a resetting device for effecting such restoration of the braking mechanism to a first operational state.

Yet further, the invention provides a hand propelled vehicle, for example, a shopping trolley, characterised in that it is provided with at least one support device according to the first aspect of the invention.

Other features and advantages of the present invention are described hereafter and/or claimed in the claims hereof.

The invention will now be described by way of example with reference to the accompanying drawings, of which:
Figure 1 is an exploded perspective view of a support device, in the form of a castor, according to the invention,
Figure 2 is a view in the direction of arrow 2 of figure 1 of the principal braking components of the castor of figure 1, in a first operative condition,
Figures 3 and 4 are further views as figure 2, but showing the components in second and third operative conditions,
Figure 5 is a side view of the castor in the direction of arrow 5 of figure 1,
Figure 6 is a cross-section of the castor as indicated by the line 6-6 of figure 5.

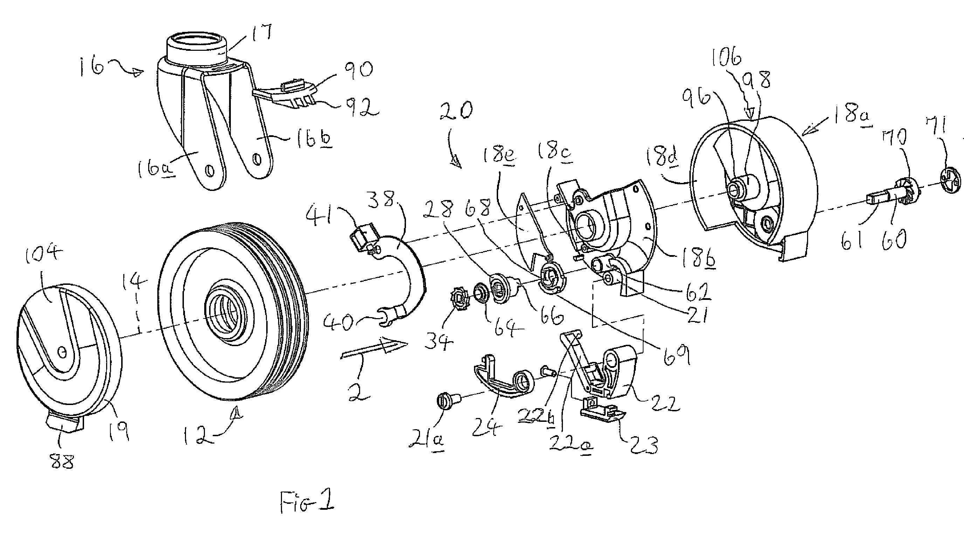

Referring firstly to figure 1 of the drawings, a support device in accordance with the invention, in the form of a castor, comprises a ground-engageable wheel indicated generally at 12 which is carried, for rotation about an axis 14, by a connection member in the form of a fork 16 having limbs 16a, 16b which lie on respective opposite sides of the wheel 12, The fork 16 further comprises a boss 17 which may house a bearing for a component, not shown, connectable to a vehicle such as a shopping trolley, to enable the fork 16 to pivot relative to the vehicle about an axis which is vertical or near-vertical in use and from which the axis 14 is spaced. Hence, the well-known pivoting action of a castor about the vertical axis can take place in use. However, the invention, in the form of the braking assembly described hereafter, is applicable to a wheel which is not able to pivot in the manner of a castor.

In addition to the wheel 12, the fork 16 carries a housing indicated generally at 18 on one side of the wheel, the housing 18 comprising first and second housing parts namely a cover part 18a and a support part 18b, and a cover 19 at the other side of the wheel. The housing 18 supports various components described hereafter of a braking assembly 20.

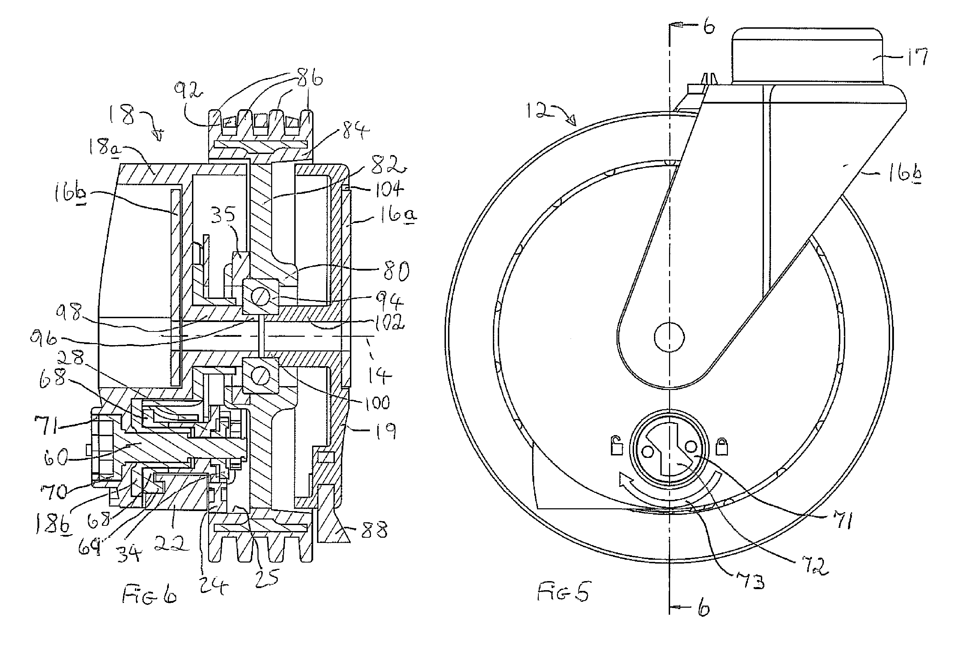

The configuration of the wheel 12 is seen clearly in figures 1 and 6 of the drawings. It comprises a central hub part 80 from which an annular web 82 extends outwardly to a rim part 84. The rim part 84 has a tread which comprises four ridges 86 equally spaced across its width, the spacing of the annular ridges 86 being such as to co-operate with the tread on the support elements of a travelator, with the ridges 86 extending downwardly between ridges of the travelator tread so that a trolley to which the castor is fitted tends to remain in place once it has been moved onto the travelator. To assist this, the cover 19 carries a support foot 88 which rests on the travelator tread top surface adjacent the wheel 12. This assists safety when a shopping trolley or the like is being used on a travelator, The fork 16 carries a comb 90 with projections as indicated at 92 which lie between the tread ridges 86 to keep the grooves, defined between the ridges, clear of debris.

The hub part 80 of the wheel carries an outer race of a rolling-element bearing assembly 94. An inner race of the bearing assembly is supported on a nose portion 96 of a spigot 98 extending from the housing part 18a and on a corresponding nose portion 100 of a further spigot 102 extending from the cover 19 towards the spigot 98. A bolt, not shown, is passed through aligned apertures near the free ends of the limbs 16a, 16b of the fork 16 and through the spigots 98, 102, so that the wheel is rotatably supported relative to the fork.

It will be noted in figure 1 that the cover 19 has, in its surface facing away from the wheel 12, a recess 104 whose shape corresponds to that of the lower part of the limb 16a of the fork 16, and the housing part 18a has a formation indicated at 106 which receives the fork limb 16b. Hence, the housing 18 and cover 19 do not rotate relative to the fork 16 as the wheel rotates.

The braking assembly, indicated generally at 20 in figure 1, comprises a stop member 22 and a braking member 24. Both the stop member and braking member are pivotably supported on a boss 21 on the housing part 18b and retained thereon by a fastener 21a. The stop member 22 carries a replaceable ground-engaging foot part 23 and has a pivotably connected guide part 22a whose other end is constrained between the housing part 18b and a cover plate 18e secured to the housing part 18b. A guide peg 22b on the end of the guide part 22a is contained between an arcuate wall 18c on the housing part 18b and a part-circular peripheral wall 18d of the housing part 18a. The braking member 24 is in the form of a brake shoe with an arcuate braking surface engageable with an inner circumferential surface part 25 of the rim 84 of the wheel 12, so as frictionally to inhibit rotation of the wheel 12 in accordance with the force with which the braking member engages the wheel.

For causing operation of the braking member and stop member, in a manner to be described hereafter, a shaft 60 is rotatably supported by the housing part 18a and extends towards the web 82 of the wheel 12 through a hollow boss 62 on the housing part 18b, adjacent the boss 21. The shaft has an end portion 61 of square cross-section on which are received a drive wheel 34 with peripheral ratchet teeth and a cam member 28. A coil compression spring 64 is disposed between the drive wheel 34 and cam member 28 so that these components are urged axially of the shaft 60 away from one another but are both rotationally fast with the shaft by virtue of co-operating with the square-section portion 61 thereof. It will be appreciated that instead of square cross-section, the portion 61 of the shaft could be of any other non-circular cross-section so that the drive wheel 34 and cam member 28 can be rotationally fast with the shaft. A suitable retaining member, e.g. a circlip or the like, not shown, is provided for retaining the drive wheel 34 on the shaft 60. The cam member 28 has drive dogs 66 which engage with complementary dogs on a holding member 68 which is rotatably supported on the boss 62. The holding member 68 has a peripheral wall portion 69 which is able to co-operate with the stop member 22 to hold or release the latter, as required, and as described hereafter.

At the opposite end of the shaft 60 to that having the drive wheel 34 and associated parts, the shaft has a head 70 whose surface which faces the housing part 18b is provided with ratchet teeth (visible in figure 1) engageable with complementary ratchet teeth provided on a facing surface of the housing part 18a or 18b. It will be appreciated from a consideration of the arrangement of the components on the shaft 60, that the spring 64 causes the ratchet teeth on the head 70 to engage the complementary ratchet teeth on the housing part 18b, to prevent the shaft 60 from rotating in one direction when the teeth are engaged with one another. The shaft is, however, able to rotate in the opposite direction, being free to move axially to the extent necessary for the ratchet teeth to move over one another. The recess in the head 70 is closed by a cover plate 71 having a "bow tie" shaped aperture 72 enabling a correspondingly-shaped operating part of a key or resetting device to be inserted through the aperture and, when turned slightly, to be used to pull the shaft axially to the extent necessary to enable the ratchet teeth of the head 70 thereof to be disengaged from the complementary ratchet teeth on the housing part 18b, and enable the shaft 60 to be turned manually in the direction indicated by the arrow 73 shown on figure 5. Suitable abutments may be provided in the recess of the head 70, or the key may co-operate with the cover plate 71, to facilitate turning of the shaft 60 in this manner.

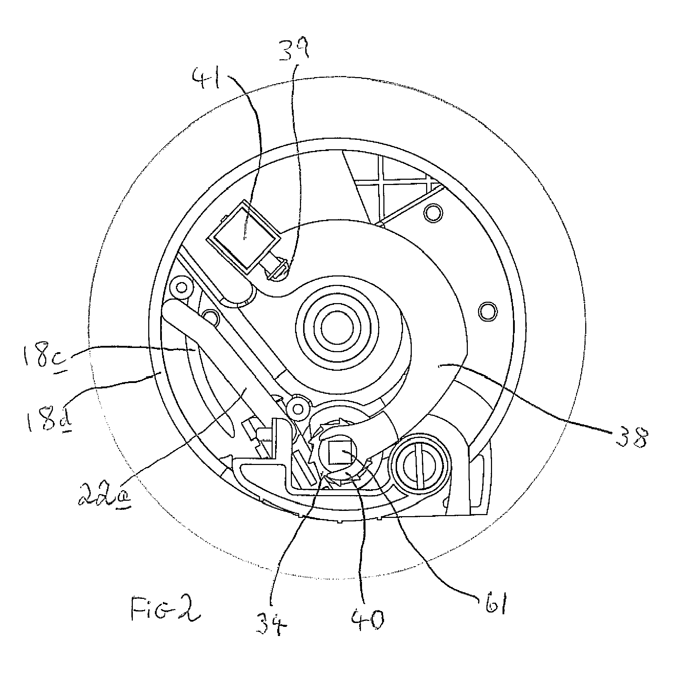

The braking assembly 20 further comprises a retaining member 38 which is illustrated in different operative positions in figures 2, 3 and 4. The retaining member 38 is a generally arcuate component which is pivotably carried on a pivot formation 39 of the housing part 18b, and which extends around within the housing part 18a to end in a fork 40. Adjacent its pivot, the retaining member carries a solenoid 41. In a first operative position of the retaining member 38, illustrated in figure 2 of the drawings, the axis of the shaft 60 extends through the fork 40, and this position of the retaining member is able to be assumed only when the shaft 60 has been pulled, in the manner described above, so that the drive wheel 34 is moved (to the left, with reference to figure 6 of the drawings), to a position which it no longer occupies the space occupied by the fork 40 in figure 2.

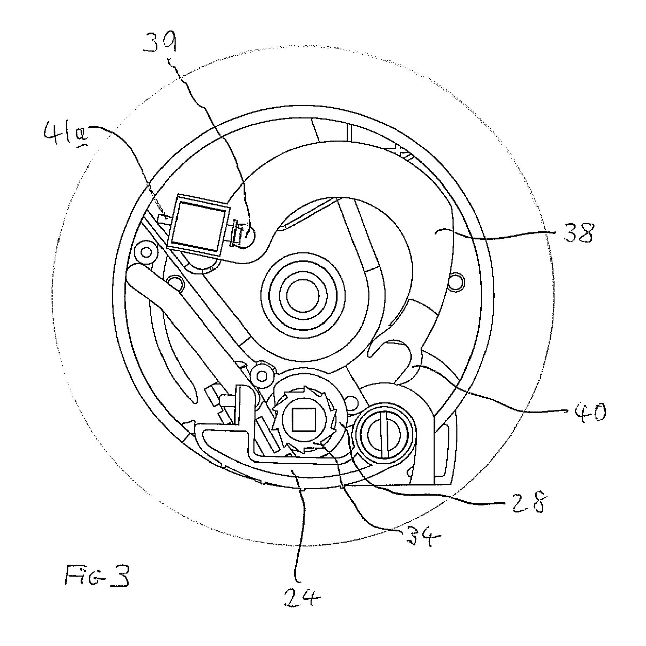

In a second operative position of the retaining member 38, illustrated in figure 3, the retaining member has been pivoted about the pivot point 39 until the fork 40 of the retaining member is well clear of the drive wheel 34. This enables the drive wheel 34 to move axially of the shaft 61, under the influence of spring 64, until it is in alignment with a tooth 35 carried by the wheel 12 adjacent the hub part 80. Then, for each rotation of the wheel of the castor, the drive wheel 34 is moved angularly by one of its ratchet teeth, and the cam member 28 and holding member 68 by a corresponding amount.
Although not illustrated in the drawings, a spring is operative upon the retaining member 38 to spring bias it to pivot towards the position in which it is shown in figure 2 of the drawings, i.e. in which it causes the drive wheel 34 to be held in a position in which it cannot engage with the drive tooth 35 of the wheel 12.

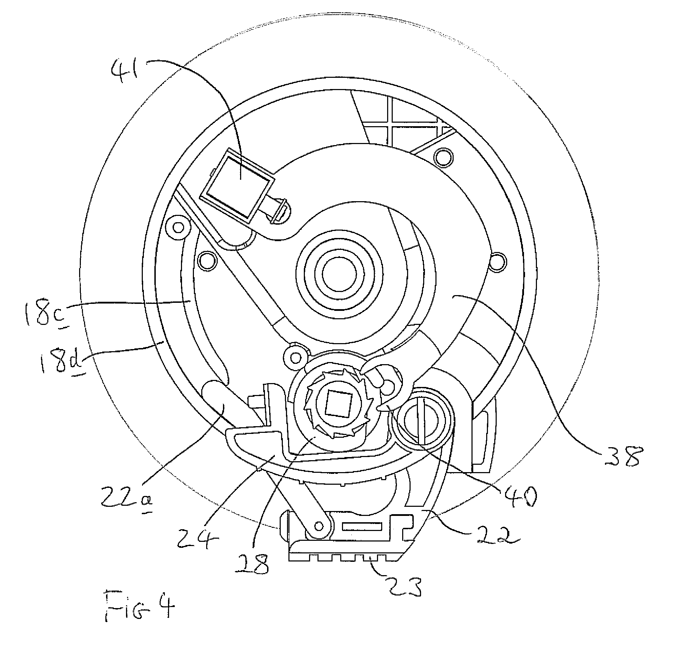

For causing the retaining member 38 to be moved from its figure 2 position to its figure 3 position, an initiation means is provided. When the solenoid 41 is electrically energised, an engagement element 41a is caused to project outwardly of the solenoid into a region where it can be contacted by a suitable engagement formation (not shown) on the wheel as the latter rotates, causing the retaining member to be moved. Such an engagement formation on the wheel can be provided on the web part 82 thereof, adjacent the rim of the wheel, or inside the rim. The solenoid need only be energised for a time sufficient to enable the element 41a to be engaged by the wheel whereupon the retaining member is moved to its figure 3 position, and immediately the drive wheel 34 is moved to the position in which it can be engaged by the tooth 35 of the wheel. The solenoid 41 can then be de-energised, whereupon the retaining member returns, under the action of its biasing spring, to a third position in which it is shown in figure 4. Its fork 40 contacts the ratchet drive wheel 34, so the retaining member cannot return all the way to its first, figure 2, position.

The castor is provided with a receiving apparatus for an initiating signal, which may be a digital or analogue electrical, preferably radio-frequency, signal transmitted by a transmitting element extending along the perimeter of the area in which free movement of the trolley, or other vehicle fitted with the castor, is required. Alternatively, the initiation means may respond to a magnetic or electric field established in the appropriate place. The castor would be provided with a power source, e.g. a primary or rechargeable battery or batteries, for powering such a receiving apparatus and energising the solenoid when required.

In operation of the castor and its braking assembly, as above described, the normal operating condition of the components is as shown in figure 2. The braking assembly 20 is completely inoperative, with the braking member 24 out of contact with the surface 25 of the wheel, and the stop member 22 held clear of the ground surface by engagement of the retaining formation 69 therewith. The wheel 12 is able to rotate freely without the cam member 28 and holding member 68 being rotated. If one or more castors as described are provided on a shopping trolley or the like, the trolley may be moved freely without hindrance, as is required when the trolley is located within a specified area (such as the interior af a supermarket and the immediate external area for example a car park).

When the trolley reaches or crosses the boundary of its permitted area of operation and its initiating signal for the braking assembly is received, the receiving circuit causes the solenoid 41 to be electrically energised, so that upon the next rotation of the wheel the retaining member 38 is moved from its figure 1 position to its figure 2 position as above described, enabling the ratchet drive wheel to be rotationally moved by one of its teeth as it is engaged by the wheel tooth 35 at each further rotation of the wheel. Possibly the wheel could be provided with more than one tooth as 35, spaced circumferentially around the wheel, so that the ratchet drive wheel 34 is rotationally moved by more than one of its teeth for each rotation of the wheel 12.

Such rotation of the wheel 34 causes the cam member 28 to be rotated so that its cam surface bears on the braking member 24 causing the latter to be pivoted downwardly about the spigot 21. The braking member bears against the surface 25 of the wheel with increasing force, causing the wheel 12 to be braked progressively more strongly. If the user of the trolley (or other vehicle on which the castor 10 is provided) continues to move the trolley, the drive wheel 34 is rotated further and with it the cam member 28 and holding member 68. After a certain rotational movement of the holding member 68, the holding formation 69 thereof is disengaged from the stop member 22, allowing the stop member to fall from the position in which it is shown in figures 2 and 3 to that in which it is shown in figure 4. As the stop member approaches the figure 4 position, it makes contact with the ground on which the castor is moving and is then moved by such contact, upon continuing movement of the castor, until the figure 4 position is fully attained, The geometry is such that in this position the wheel 12 is moved out of contact with the ground. Hence the trolley or the like is prevented from easy movement over the ground surface. The wheel is still braked by engagement of the braking member 24 therewith, but this is of no consequence since it is not in contact with the ground. If the wheel were moved over the ground surface in the reverse direction, the stop member could be caused thereby to pivot to a position in which it no longer lifts the wheel above the ground surface, but since the wheel is braked it is still difficult for the trolley to be moved by a user.

As far as the user of a trolley is concerned, the fact that the wheel is braked before it is lifted out of contact with the ground gives the user warning that the area in which free operation of the castor is permitted has been left, before the stop member is deployed to stop operation of the castor.

When the castor is to be reset to its condition of normal operation, an authorised person has to use the resetting key as above described to engage the head 70 of the shaft 60. Without such a key, the ratchet teeth on the head 70 prevent the reverse rotation of the shaft 60 to the position in which the braking member 24 is no longer applied to the wheel 12. The authorised person must return the stop member 22 to the position in which it is shown in figures 2 and 3, and engage the head 70 with the resetting key to pull the head away from the castor wheel and turn it in the direction of arrow 73. This returns the holding member 68 to the position in which it engages the stop member to hold it in the position in which it is shown in figure 6, and returns the cam member 28 to the position in which it no longer bears upon the braking member 24 to urge it into braking engagement with the wheel. When the shaft 60 has been displaced along its axis by pulling the head 70, the ratchet drive wheel 34 is moved clear of the fork 40 of the retaining member 38, so that the latter can return, under the influence of its biasing spring, to the figure 2 position in which the ratchet drive wheel 34 is held in a position in which it cannot be rotated by the wheel 12.

Although not shown in the drawings, a spring is provided to operate on the braking member 24 to bias it out of engagement with the surface 25 of the wheel 12, into contact with the cam member 28.

Instead of the stop member 22 being arranged to be held out of ground contact by the holding member 68, then being released to fall under gravity to engage the ground as above described, the stop member may instead, or possibly additionally, be arranged to be deployed by being operated on by a further cam member, in a manner analogous to the operation of the braking member 24. Such a cam member could be a separate component, as the holding member 68, or could be formed as a further part of the cam member 28. Such a further cam member may be arranged to deploy the stop member to a position in which it just makes contact with the ground surface, whereupon further movement of the castor causes its full deployment as above described. When the stop member is caused to be deployed by a cam member, the configuration of the cam member and/or its mode of cooperation with the stop member would be different from the configuration of the cam member 28 and/or its mode of cooperation with the braking member, since the braking member is required to be brought into operation before the stop member is deployed. A spring or the like may bias the stop member to its non-operative position. In this case, resetting of the components of the castor to their starting condition may not require the stop member to be moved manually to its starting position. Resetting may be achieved solely by the above described pulling and turning of the head 70 of the shaft 60, 61.

It is to be appreciated that the principle of the invention as above described may be applied to a support device comprising more than one wheel, braking member, and/or stop member. As above described, the wheel is of a form intended for use in situations where a vehicle to which the support device is fitted might require to be used on a travelator, but it may be a wheel for use on ordinary ground surfaces. For travelator use, the form of the wheel between the ridges 86 of its tread may be that of a many-sided polygon.

It will further be appreciated that different physical arrangements and forms of the various components above described may be utilised in accordance with the broadest aspect of the invention. For example, a retaining member 38 of different configuration, or moveable linearly rather than pivotally, may be utilised. As an alternative to the provision of a tool for resetting the braking assembly of the supporting device to its first, inoperative position, it would be possible to arrange for such resetting to be carried out automatically upon receipt of a suitable reset signal by the receiving device provided in the support device.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A wheeled support device comprising a rotatable ground-engageable wheel (12) and a braking mechanism, **characterised in that** the braking mechanism comprises a braking member (24) which is operable to inhibit rotation of the wheel, and a stop member (22) which is operable to engage the ground and move the wheel out of contact with the ground.

2. A support device according to claim 1 further **characterised in that**, upon operation of the braking mechanism, the stop member (22) is arranged to be operated subsequent to operation of the braking member (24), so that rotation of the wheel (12) is inhibited by the braking member before the wheel is moved out of contact with the ground by the stop member (22).

3. A support device according to claim 1 or claim 2 further **characterised in that** the braking member (24) is caused to engage a surface (25) of the wheel with increasing force, increasingly to inhibit the rotation of the wheel before the stop member (22) is operated.

4. A support device according to any one of the preceding claims further **characterised in that** the braking mechanism includes elements (34, 28, 68) arranged to be driven by rotation of the wheel (12), to cause operation of the braking member and stop member.

5. A support device according to claim 4 further **characterised in that** said elements include a cam (28) for operating the braking member (24).

6. A support device according to claim 4 or claim 5 wherein said elements include a further cam for operating the stop member (22).

7. A support device according to claim 4 or claim 5 or claim 6 wherein said elements include a holding member (68) for holding the stop member 22 in a non-operating position, and for releasing the stop member to operate.

8. A support device according to any one of claims 4 to 6 wherein said elements (34, 28, 68) are rotatably driveable by the wheel (12).

9. A support device according to any one of claims 4 to 8 further **characterised in that** a drive element (34) is held by a retaining member (38) in a position in which it is not driveable by the wheel, and is releasable by the retaining member to move to a position in which it is engageable by at least one driving formation (35) of the wheel as the wheel rotates.

10. A support device according to claim 9 further **characterised in that** the drive element (34) is a ratchet wheel, able to be rotated tooth by tooth by the at least one driving formation (35) of the wheel.

11. A support device according to claim 9 or claim 10 further **characterised in that** the retaining member is caused to move to release the drive element (34) by an initiation means responsive to an initiation signal.

12. A support device according to claim 11 further **characterised in that** the initiation means comprises an engagement element (41a) for engaging the wheel (12) so that rotation of the wheel moves the retaining member (38) to release the drive element (34).

13. A support device according to claim 12 further **characterised in that** the initiation means comprises an electro-mechanical device (41), for moving the engagement element (41a) to be engaged by the wheel (12).

14. A support device according to claim 4 or any claim appendent thereto further **characterised in that**, for restoring the braking mechanism to a first operational state, the elements are resettable manually, using a resetting device.

15. A support device according any one of the preceding claims further **characterised in that** the support device is a castor assembly.

16. A hand-propelled vehicle **characterised in that** it is provided with at least one support device according to any one of the preceding claims.
